# EUROPÄISCHE PATENTANMELDUNG

(11) **EP 3 046 134 A1**
(43) Veröffentlichungstag der Anmeldung: **20.07.2016**
(21) Anmeldenummer: 15151254.8
(22) Anmeldetag: 15.01.2015
(51) Int. Cl.: H01J 49/00, H01J 49/24, G01N 27/62, H01M 8/04, F28D 21/00

(54) **Gasanalysator mit Brennstoffzelle**

(71) Anmelder: Bruker Daltonik GmbH, 28359 Bremen (DE)
(72) Erfinder: Landgraf, Jürgen, 06193 Gutenberg (DE)

(57) **Zusammenfassung**

Die Erfindung bezieht sich auf Gasanalysatoren, insbesondere auf mobile Ionenmobilitätsspektrometer oder Massenspektrometer, die bei Atmosphärendruck zum Aufspüren gefährlicher Substanzen betrieben werden. Die Erfindung verwendet eine Brennstoffzelle für die Erzeugung der elektrischen Betriebsenergie des Gasanalysators, wobei die Abwärme der Brennstoffzelle für eine Temperierung von Baugruppen des Gasanalysators genutzt wird.

## Beschreibung

Die Erfindung betrifft Gasanalysatoren, insbesondere mobil einsetzbare Gasanalysatoren, mit einer Brennstoffzelle zur Erzeugung der elektrischen Betriebsenergie.

### Stand der Technik

Ionenmobilitätsspektrometer (IMS) und Massenspektrometer (MS), die im Folgenden zusammengefasst auch als Gasanalysatoren bezeichnet werden, werden im zivilen wie auch im militärischen Bereich für das Aufspüren von gefährlichen oder verbotenen Zielsubstanzen auf Oberflächen oder in der Umgebungsluft eingesetzt. Dabei können die in den Gasanalysatoren verwendeten Ionenmobilitätsanalysatoren und Massenanalysatoren mit gaschromatographischen Vorrichtungen oder anderen Analysatoren, z.B. Infrarot-Spektrometer, gekoppelt sein.

Die Ionenmobilitätsspektrometer werden für die oben genannten Anwendungen in der Regel bei Umgebungsdruck betrieben und zeichnen sich durch einen einfachen und kompakten Aufbau aus, wodurch sie sich in großen Stückzahlen und als mobile Nachweisgeräte einsetzen lassen. In einem Ionenmobilitätsspektrometer werden die nachzuweisenden Substanzen (Zielsubstanzen) sowie Stör- und Hintergrundsubstanzen in der Regel durch chemische Ionisierung (APCI = Atmospheric Pressure Chemical Ionization) ionisiert. Die Ionen bewegen sich danach unter Einwirkung elektrischer Felder in einem Driftgas, werden dort aufgrund ihrer Mobilität oder der Feldstärkeabhängigkeit ihrer Mobilität getrennt und in einem Ionendetektor nachgewiesen. Im Gegensatz dazu, werden in einem Massenspektrometer, wie z.B. einer 2D- oder 3D-Paulfalle oder einem Quadrupolfilter, die Ionen der nachzuweisenden Substanzen ins Vakuum überführt und dort nach ihrem Masse-zu-Ladungsverhältnis analysiert.

Der Nachweis von Explosivstoffen und chemischen Kampfstoffen hat neben dem militärischen Bereich aufgrund einer zunehmenden terroristischen Bedrohungslage auch für den Zivilschutz eine große Bedeutung erlangt. Dabei besteht die Aufgabe einerseits darin, eine illegale Einfuhr und Anschläge auf Transportmittel, wie etwa Flugzeuge oder Schiffe, zu verhindern. Andererseits wird der Zivilschutz zunehmend auch auf öffentliche Gebäude und Verkehrsmittel im Inland selber erweitert. Neben den Gefährdungen durch Explosiv- und Kampfstoffe besteht weiterhin die Aufgabe, Drogen beim Schmuggel über Landesgrenzen aufzuspüren. Daraus ergibt sich insbesondere ein stark wachsender Bedarf für Nachweisgeräte an Flughäfen, Seehäfen und Grenzkontrollstationen, wobei die illegalen und gefährdenden Zielsubstanzen sowohl in Gepäckstücken als auch in industriellen Containern transportiert werden. Eine weitere zivile Anwendung besteht in der Überwachung von industriellen Geländen und Gebäuden hinsichtlich austretender chemischer Schadstoffe oder in der Detektion von chemischen Schadstoffen bei Verkehrsunfällen, Havarien oder Bränden durch die Feuerwehr.

Eine besondere Herausforderung bildet die Detektion von Drogen und Sprengstoffen, in Transportbehältnissen, beispielsweise in Koffern auf Flughäfen, Containern in Seehäfen oder Fahrzeugen bei Verkehrskontrollen. Die Detektion von modernen Sprengstoffen und auch von Drogen wird dadurch erschwert, dass diese Substanzen einen sehr niedrigen Dampfdruck aufweisen und zudem oft in Transportbehältnissen verschlossen sind. In den meisten Fällen ist deshalb ein direkter Nachweis in der Umgebungsluft nur dann möglich, wenn ein großes Probenvolumen genommen wird und die Substanzen aus dem Probenvolumen angereichert werden. Allerdings werden bei der Verpackung der Zielsubstanzen die Oberflächen der Gepäckstücke, der Transportbehälter und der Kleidungsstücke der verpackenden Personen sowie deren Haut mit minimalen Spuren der Zielsubstanzen kontaminiert. Die Zielsubstanzen liegen als kondensierte Dämpfe auf der Oberfläche selber oder auf der Oberfläche anhaftender Partikeln vor, entwickeln aber einen zu geringen Dampfdruck, um direkt in der Umgebungsluft nachgewiesen werden zu können.

Wegen des geringen Dampfdrucks werden die zu untersuchenden Oberflächen in der Regel mit einem Probennehmer (z.B. aus Papier oder mit Teflon beschichtete Glasfasergewebe) abgewischt, wodurch kondensierte Zielsubstanzen und Zielsubstanzen tragende Partikel von der Oberfläche abgelöst werden und am Probennehmer haften bleiben. Der Probennehmer wird mit den Zielsubstanzen in eine Desorptionsvorrichtung eines Gasanalysators überführt und dort erhitzt, um einen für den Nachweis ausreichenden Dampfdruck der Zielsubstanzen zu erreichen. Es besteht auch die Möglichkeit, eine geheizte Sonde direkt an die zu untersuchenden Oberfläche anzupressen und die dabei freigesetzten Dämpfe zum Gasanalysator weiterzuleiten.

Die durch Desorption oder den entsprechenden Dampfdruck in der Gasphase vorhandenen Substanzen (Zielsubstanzen wie auch Stör- und Hintergrundsubstanzen) können sich im Inneren des Gasanalysators niederschlagen und spätere Messungen stören. Eine einfache, aber wirksame Möglichkeit, Adsorptions- und Speichereffekte zu minimieren, besteht darin, alle Oberflächen zu heizen, die mit den Substanzen in Berührung kommen. Für einen solchen Betrieb werden Baugruppen, die solche Oberflächen aufweisen, bevorzugt auf Temperaturen oberhalb der Umgebungstemperatur geheizt. Die Betriebstemperaturen liegen zwischen 50 und 200 Grad Celsius (°C), wobei beispielsweise der Einlassbereich eines Massenspektrometers zur Sprengstoffdetektion gewöhnlich auf eine Temperatur zwischen 120-200°C geheizt wird und entsprechende Baugruppen eines Ionenmobilitätsspektrometers bei Temperaturen zwischen 50-100 °C betrieben werden.

Die in der Gasphase vorhanden Substanzen gelangen bei vielen Gasanalysatoren erst über eine permeable Membran in das Innere des Gasanalysators, wobei die Membran von außen mit einem die Substanzen enthaltenen Probengas bespült wird. Die Verwendung einer Membran aus organischen Polymeren wie beispielsweise Silikongummi hat den Vorteil, dass die meisten nachzuweisenden organischen Substanzen besser durch die Membran dringen als Störsubstanzen und Wasser, so dass insbesondere bei Ionenmobilitätsspektrometern ein nachteiliger Eintrag von Feuchtigkeit verringert wird. Ein Membraneinlass erfordert erfahrungsgemäß eine Beheizung, um Verzögerungs- und Speichereffekte im Membranmaterial zu minimieren. Die Verzögerungsund Speichereffekte treten auch in den Gaskanälen zur Ionenquelle und der Ionenquelle selber auf, sodass auch Gasanalysatoren betroffen sind, die keinen Membraneinlass, sondern einen direkten Gaseinlass aufweisen. Zudem ist es oft notwendig, die verwendeten Gasanalysatoren vor dem Eindringen von Staub, Regenwasser und anderen Fremdstoffen zu schützen. Hierzu werden meist Staubfilter aus Siebgeweben oder porösen Materialien verwendet. Diese Materialien haben relativ große gasberührte Oberflächen, so dass schweiflüchtige Substanzen besonders bei niedrigen Umgebungstemperaturen dort in erheblichem Umfang adsorbiert werden oder kondensieren.

Ein weiterer Grund, Baugruppen in Gasanalysatoren heizen zu können, besteht darin, Baugruppen auf einer konstanten Betriebstemperatur zu halten, um temperaturabhängige Parameteränderungen zu minimieren, wie z.B. die Permeationsrate von Einlassmembranen. Eine konstante Betriebstemperatur verlangt jedoch entweder Möglichkeiten, zwischen Heizen und Kühlen umzuschalten, was einen hohen gerätetechnischen Aufwand verursacht, oder die Baugruppen müssen ständig bei einer Temperatur oberhalb der höchsten Umgebungstemperatur betrieben und damit ständig geheizt werden.

Die Energieversorgung von stationären Gasanalysatoren erfolgt, wo es möglich ist, über einen Anschluss an das Stromnetz. Mobil einsetzbare Gasanalysatoren werden durch elektrochemische Zellen (Batterien und wieder aufladbare Akkumulatoren) versorgt, insbesondere durch elektrochemische Zellen mit hoher Energiedichte wie Lithium-Mangan- oder Lithium-Ionen Zellen. Die oberhalb der Umgebungstemperatur betriebenen Baugruppen werden dabei elektrisch geheizt, weshalb die für die Energieversorgung eingesetzten elektrochemischen Zellen in diesen Fällen einen wesentlichen Anteil am Volumen und Gewicht der mobil einsetzbaren Gasanalysatoren ausmachen.

Die technische Entwicklung kleiner Brennstoffzellen (FC = fuel cell) mit Leistungen bis zu einigen 10W, die in mobilen Rechnern und Kommunikationsgeräten eingesetzt werden, ist weit fortgeschritten. Derartige Brennstoffzellen können auch für mobil eingesetzte Gasanalysatoren verwendet werden. Aus der Druckschrift US 2004/0120857 A1 (Smith et al.) ist ein Netzwerk aus Sensoren bekannt, die an verschiedenen Orten Zielsubstanzen detektieren und Messdaten an eine Kontrolleinheit übertragen, wobei die Sensoren unter anderem Massenspektrometer und Ionenmobilitätsspektrometer sein können und die Energieversorgung der Sensoren durch elektrochemische Zellen oder durch Brennstoffzellen erfolgt. Für den Einsatz in mobilen Kleingeräten sind Direktmethanol-Brennstoffzellen (DMFC = direct methanol fuel cell) zu nennen, die Energiedichten erreichen, die die von kommerziell erhältlichen elektrochemischen Zellen um ein Mehrfaches übersteigen. Die Direktmethanol-Brennstoffzellen arbeiten bei einer Betriebstemperatur zwischen 60-130°C und weisen einen Wirkungsgrad von bis zu 40% auf.

Neben den DMFC gibt es andere Typen von Brennstoffzellen. Brennstoffzellen mit Elektrolyten aus geschmolzenen Salzen (Schmelzkarbonat-Brennstoffzelle, MCFC) werden mit Wasserstoff, Methan oder Kohlegas bei einer Betriebstemperatur von etwa 650 Grad Celsius betrieben und wiesen einen Wirkungsgrad von 48% auf. Für Spielzeuge und Experimentierkästen sind Magnesium-Luft-Brennstoffzellen (MAFC) auf dem Markt, die mit Magnesium als Brennstoff bei einer Betriebstemperatur von 55 Grad Celsius arbeiten und einen Wirkungsgrad bis 90% aufweisen. Für den Betrieb mit Wasserstoff und Sauerstoff (auch Luftsauerstoff) gibt es insbesondere die Polymerelektrolyt-Brennstoffzelle (PEMFC) mit Polymer-Membranen, die mit Wirkungsgraden zwischen 35 und 60% bei Betriebstemperaturen zwischen 90 und 120 Grad Celsius arbeitet. Die Phosphorsäure-Brennstoffzelle (PAFC, 38%, 200°C), ebenfalls mit Polymer-Membran, wird mit Wasserstoff und Luft betrieben, wobei keine Reingase notwendig sind. Die alkalische Brennstoffzelle (AFC, über 60%, <80°C) wird ebenfalls mit Wasserstoff und Luft betrieben, wobei aber die Luft kein CO₂ enthalten darf. Die Festoxid-Brennstoffzelle (SOFC) arbeitet mit Kohlenstoff und Sauerstoff bei einer Betriebstemperatur von 800-1000°C mit einem Wirkungsgrad von 47%.

### Aufgabe der Erfindung

Es ist Aufgabe der Erfindung, Gasanalysatoren bereitzustellen, die im vom Stromnetz unabhängigen Betrieb oder im mobilen Einsatz eine möglichst lange Betriebsdauer und dabei eine kompakte Baugröße aufweisen.

### Kurze Beschreibung der Erfindung

Die Erfindung stellt Gasanalysatoren bereit, die eine Brennstoffzelle und mindestens eine oberhalb der Umgebungstemperatur betriebene Baugruppe aufweisen und dadurch gekennzeichnet sind, dass die Brennstoffzelle thermisch mit der mindestens einen Baugruppe gekoppelt ist und die Abwärme der Brennstoffzelle wesentlich zur Heizung der mindestens einen Baugruppe beiträgt. In einem erfindungsgemäßen Gasanalysator wird bevorzugt mehr als 20%, typischerweise um 50% (in manchen Fällen aber auch bis zu 100%) der für die eine oder mehreren Baugruppen benötigten Heizleistung durch die Abwärme der Brennstoffzelle erbracht. Die Baugruppe, die mit der Brennstoffzelle thermisch gekoppelt ist, kann eine Membran eines Einlasssystems, eine Desorbervorrichtung (z.B. von Wischproben), ein Filter (z.B. ein Staubfilter im Einlassbereich eines Ionenmobilitätsspektrometers), eine Ionenquelle und/oder ein Ionenanalysator (z.B. ein Mobilitäts- oder Massenanalysator) sein.

Die Brennstoffzelle kann die gesamte elektrische Leistung des Gasanalysators erzeugen, die im Betrieb nicht für die Heizung von Baugruppen, sondern insbesondere für die Elektronik oder mechanischen Komponenten (wie z.B. Pumpen) benötigt wird. Die in der Brennstoffzelle erzeugte elektrische Leistung kann auch für die Heizung einer oder mehrerer Baugruppen verwendet werden (elektrische Zusatzheizung), insbesondere für eine regelbare Heizung. Der Gasanalysator kann zusätzlich noch eine oder mehrere elektrochemische Zellen enthalten, die einen Teil der elektrischen Leistung und/oder der Heizleistung erzeugen. Der Gasanalysator kann ebenfalls mehrere Brennstoffzellen aufweisen, die alle oder zum Teil thermisch mit einer oder mehreren Baugruppen gekoppelt sind.

Eine mit der Brennstoffzelle gekoppelte Baugruppe hat bevorzugt eine Betriebstemperatur zwischen 40 bis 250 Grad Celsius. Die Betriebstemperatur beträgt bevorzugt zwischen 50-200°C, wenn Umgebungsluft mit einem Ionenmobilitätsanalysator untersucht wird. Für den Fall der Sprengstoffdetektion beträgt die Betriebstemperatur bevorzugt zwischen 120-200°C, insbesondere bei Verwendung eines Massenanalysators oder mehrerer Massenanalysatoren in einer MSⁿ Analyse (n=2,3,...). Die Brennstoffstelle sollte zudem thermisch von anderen Baugruppen des Gasanalysators isoliert sein, die nicht oberhalb der Umgebungstemperatur betrieben werden, und kann auch von der Umgebung thermisch isoliert sein. Die Betriebstemperatur der Komponente der Brennstoffzelle, in der die Abwärme entsteht, weist bevorzugt mindestens die Betriebstemperatur der geheizten Baugruppe des Gasanalysators auf. Liegt die Betriebstemperatur der Brennstoffzelle unterhalb der Betriebstemperatur der thermisch gekoppelten Baugruppe, wird diese zusätzlich elektrisch geheizt. Die Brennstoffzelle ist bevorzugt vom DMFC-Typ, insbesondere wenn dar Gasanalysator ein Ionenmobilitätsspektrometer ist. Es ist aber ohne weiteres auch der Einsatz der in der Einleitung aufgezählten Brennstoffzelltypen möglich.

Die Brennstoffzelle kann durch ein Wärmerohr (im Englischen "heat pipe") oder durch einen Gas- oder Flüssigkeitskreislauf (Fluidkreislauf) thermisch mit einer geheizten Baugruppe gekoppelt sein. Das im Wärmerohr verwendete Medium und der Druck innerhalb des Wärmerohrs sind vorzugsweise so gewählt sind, dass die Siedetemperatur etwa der Betriebstemperatur der zu beheizenden Baugruppe entspricht. Die thermische Kopplung kann auch durch ein Peltierelement erfolgen, das mit der Brennstoffzelle und der geheizten Baugruppe verbunden ist.

Des Weiteren kann ein erfindungsgemäßer Gasanalysator eine Vorrichtung zur Regelung der thermischen Kopplung zwischen der Brennstoffzelle und der geheizten Baugruppe aufweisen. Die Vorrichtung kann die thermische Kopplung der Brennstoffzelle schalten (d.h. ein- und ausschalten) oder stetig verändern, so dass die Betriebstemperatur der Baugruppe regelbar ist. Die Vorrichtung kann einen mechanischen Kontakt zwischen der Brennstoffzelle und der geheizten Baugruppe herstellen, der schaltbar ist oder dessen Andruckkraft veränderlich ist. Eine weitere Möglichkeit, die Betriebstemperatur der geheizten Baugruppen zu regeln, besteht darin, dass der Gasanalysator eine Vorrichtung zur Regelung der Betriebstemperatur der Brennstoffzelle oder zum Ein-/Ausschalten der Brennstoffzelle oder zum Regeln der Leistung der Brennstoffzelle aufweist. Die Regelung durch das Ein- und Ausschalten einer Brennstoffzelle ist insbesondere dann leicht möglich, wenn der Gasanalysator mehrere Brennstoffzellen oder zusätzlich eine elektrochemische Zelle oder beides aufweist, um den Gasanalysator mit der erforderlichen elektrischen Betriebsenergie zu versorgen. Die Wärmemenge, die über die thermische Kopplung von der Brennstoffzelle auf die geheizte Baugruppe übertragen wird, kann auch mit einer schaltbaren oder stetig veränderlichen Kühlung über einen Kühlkörper oder Wärmetauscher verändert werden, der thermisch mit der Brennstoffzelle verbunden ist und Abwärme aus dem Inneren des Gasanalysators nach Außen ableitet. Zudem kann die Baugruppe zusätzlich elektrisch geheizt werden, um die erforderliche Temperatur der Baugruppe zu erreichen und/oder um die Temperatur zu regeln, wobei die elektrische Heizleistung bevorzugt durch die Brennstoffzelle erzeugt wird, oder mit einem regelbaren Wärmetauscher verbunden sein, über den Wärme aus der Baugruppe an die Umgebung abgeführt wird.

Die Erfindung stellt auch ein Verfahren zum Betrieb eines Gasanalysators bereit, der bei Atmosphärendruck zum Aufspüren gefährlicher Substanzen betrieben wird und eine Brennstoffzelle und mindestens eine oberhalb der Umgebungstemperatur betriebene Baugruppe aufweist, bei dem die Brennstoffzelle für die Erzeugung der elektrischen Betriebsenergie des Gasanalysators verwendet wird. Das Verfahren ist dadurch gekennzeichnet, dass die Abwärme der Brennstoffzelle für eine Temperierung der mindestens einen Baugruppe genutzt wird.

### Kurze Beschreibung der Abbildungen

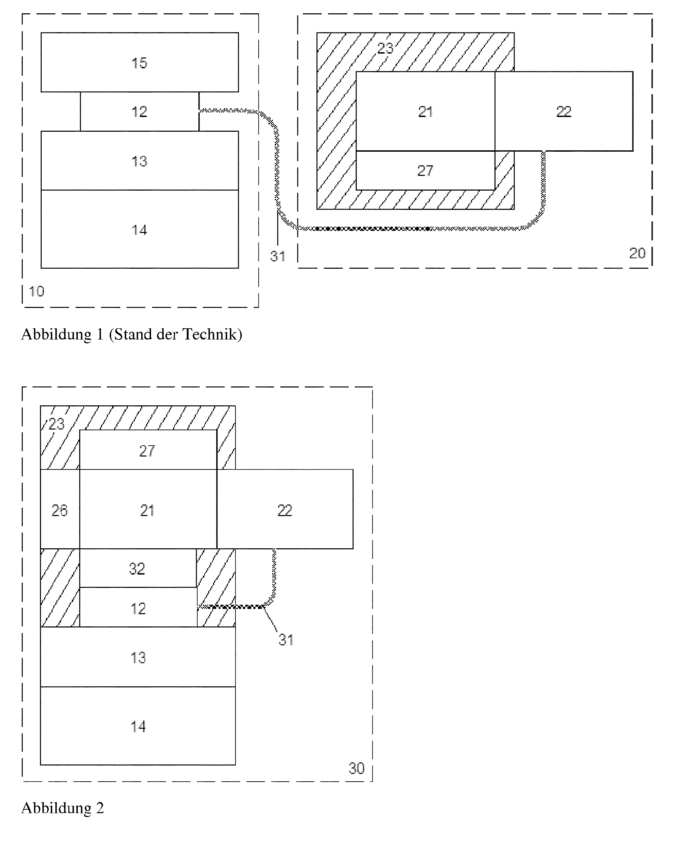

Die Abbildung 1 zeigt eine aus dem Stand der Technik bekannte Kombination eines Gasanalysators (20) mit einer separaten Brennstoffzelle (10) zur Stromversorgung. Der Gasanalysator (20) ist ein Ionenmobilitätsspektrometer, der bei Umgebungstemperatur betriebene Baugruppen (22) und oberhalb der Umgebungstemperatur betriebene Baugruppen (21) aufweist, die zur Aufrechterhaltung ihrer Betriebstemperatur mittels einer elektrischen Heizung (27) geheizt werden.

Die Abbildung 2 zeigt einen erfindungsgemäßen Gasanalysator mit einem Ionenmobilitätsspektrometer vom Driftzeit-Typ, der Baugruppen (21) aufweist, die oberhalb der Umgebungstemperatur betrieben werden und die thermisch über einen Wärmeleiter (32) mit der Reaktionszone (12) der Brennstoffzelle gekoppelt sind.

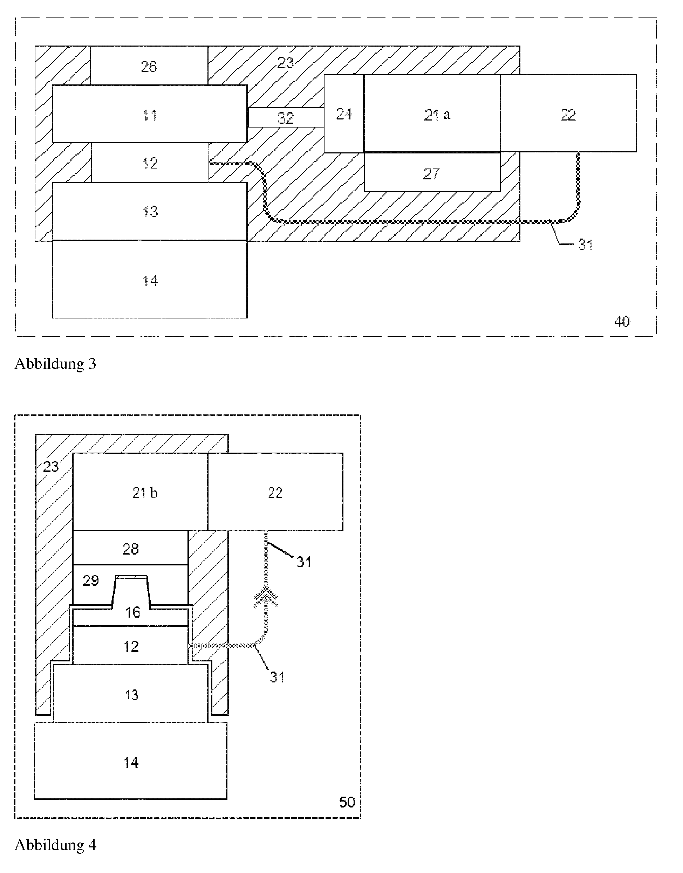

Die Abbildung 3 zeigt einen erfindungsgemäßen Gasanalysator (40) mit einem beheizten Mobilitätsanalysator (21a), der thermisch über zwei Wärmekoppler (11, 24) und ein Wärmerohr (Heatpipe) (32) mit der Reaktionszone (12) einer Brennstoffzelle gekoppelt ist.

Die Abbildung 4 zeigt einen erfindungsgemäßen Gasanalysator (50) mit einem Ionenmobilitätsspektrometer, der eine beheizbare Einlassmembran (21b) und unbeheizte Baugruppen (22) aufweist, wobei die Einlassmembran (21b) thermisch über ein Peltierelement (28) und zwei Steckbuchsen (16, 29) an die Reaktionszone (12) einer Brennstoffzelle gekoppelt ist.

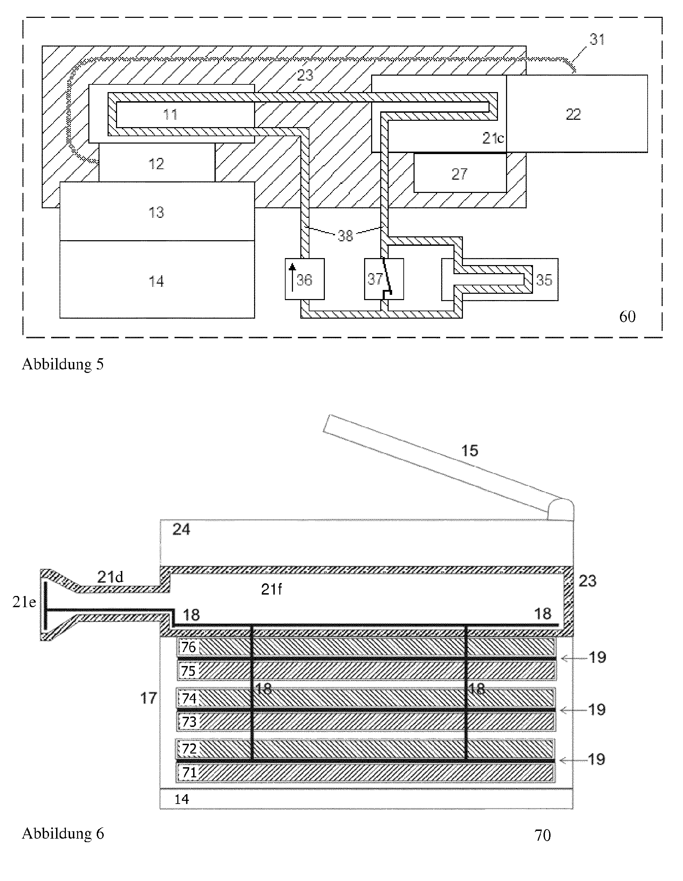

Die Abbildung 5 zeigt einen erfindungsgemäßen Gasanalysator (60) mit einem Massenspektrometer, das einen beheizten Einlassblock (21c) und unbeheizte Baugruppen (22) aufweist. Die in einer Brennstoffzellen-Batterie entstehende Abwärme wird von der Reaktionszone (12) der Brennstoffzellen mit Hilfe eines Wärmetauschers (11) über einen Flüssigkeitskreislauf abgeführt und zu dem Einlassblock (21c) geleitet.

Die Abbildung 6 zeigt den schematischen Aufbau eines Ionenmobilitätsspektrometers (70), in einer Ausführungsform mit einer geheizten Spürsonde (21d), die durch eine geheizte Membran (21e) Partikel verdampft, wobei die Dämpfe einem Mobilitätsanalysator (21f) zugeführt werden. Die Abwärme von DMFC-Brennstoffzellen (71 bis 76) wird von dünnen Kupferplatten (19) aufgenommen, und durch ein System von Wärmerohren (18) zum Mobilitätsanalysator (21f) und zur Spürsonde (21d) geführt.

### Bevorzugte Ausführungsformen

Die vorliegende Erfindung wird im Folgenden beispielhaft anhand von Ausführungsformen beschrieben, die in den Abbildungen 2 bis 6 dargestellt sind. Die erfindungsgemäßen Gasanalysatoren sind in den Abbildungen schematisch und nicht zwangsläufig maßstabsgerecht dargestellt. Relative Maße und Proportionen von einzelnen Elementen der Gasanalysatoren können vergrößert oder verkleinert abgebildet sein. In den Abbildungen werden die gleichen Bezugszeichen für übereinstimmende oder ähnliche Elemente verwendet.

Die **Abbildung 1** zeigt eine aus dem Stand der Technik bekannte Kombination eines Gasanalysators (20) mit einer separaten Brennstoffzelle (10) zur Stromversorgung. Der Gasanalysator (20) ist ein Ionenmobilitätsspektrometer vom Driftzeit-Typ und weist bei Umgebungstemperatur betriebene Baugruppen (22) und oberhalb der Umgebungstemperatur betriebene Baugruppen (21) auf, die zur Aufrechterhaltung ihrer Betriebstemperatur mittels einer elektrischen Heizung (27) geheizt werden. Die Baugruppen (21) umfassen dabei eine Desorptionsvorrichtung von Wischproben, eine geheizte Membran im Einlassbereich zur Ionenquelle, die Ionenquelle und die Driftröhre des Ionenmobilitätsspektrometers. Die Baugruppen (22) umfassen einen Ionendetektor, die Betriebselektronik und Komponenten eines Gaskreislaufes des Ionenmobilitätsspektrometers.

Zur Reduzierung der notwendigen Heizleistung sind die beheizten Baugruppen (21) und die elektrische Heizung (27) von einer Wärmeisolierung (23) umgeben. Der Gasanalysator (20) ist zur Stromversorgung über eine elektrische Leitung (31) mit der Brennstoffzelle (10) verbunden. Eine thermische Verbindung ist nicht vorgesehen und für die Funktion nicht notwendig. Die elektrische Verbindung kann auch über einen beliebig gestalteten elektrischen Kontakt erfolgen. Die Brennstoffzelle (10) beinhaltet eine Reaktionszone (12), in der die chemische Energie des Brennstoffs in elektrische Energie umgewandelt wird, eine Betriebselektronik (13) und ein Brennstoffreservoir (14). Die Brennstoffzelle kann zusätzlich ein Pumpsystem zur Förderung oder Umwälzung beteiligter Reaktanten enthalten (nicht gezeigt).

Die **Abbildung 2** zeigt einen erfindungsgemäßen Gasanalysator (30) mit einer Brennstoffzelle zur Stromversorgung, die aus einer Reaktionszone (12), einer Betriebselektronik (13) und einem Brennstoffreservoir (14) besteht. Die Brennstoffzelle kann auch eine (bevorzugt regelbare) Kühlvorrichtung zur teilweisen Ableitung der in der Reaktionszone (12) entstehenden Abwärme an die Umgebung aufweisen (nicht gezeigt). Die Brennstoffzelle ist bevorzugt eine DMFC-Brennstoffzelle mit einer elektrischen Leistung von ungefähr 25 Watt. Der Gasanalysator (30) ist zur Stromversorgung über eine elektrische Leitung (31) mit der Reaktionszone (12) der Brennstoffzelle verbunden.

Der Gasanalysator (30) ist wie der Gasanalysator (20) in der Abbildung 1 ein Ionenmobilitätsspektrometer vom Driftzeit-Typ und weist ebenfalls Baugruppen (21) auf, die oberhalb der Umgebungstemperatur betrieben werden. Die Baugruppen (21) umfassen ebenfalls eine Desorptionsvorrichtung von Wischproben, eine geheizte Membran im Einlassbereich zur Ionenquelle, die Ionenquelle und die Driftröhre des Ionenmobilitätsspektrometers. Die Baugruppen (21) sind thermisch über einen Wärmeleiter (32) mit der Reaktionszone (12) der Brennstoffzelle gekoppelt. Damit wird die Abwärme der Brennstoffzelle, die in der Reaktionszone (12) bei der Konversion von chemischer Energie in elektrische Energie entsteht, zur Beheizung der Baugruppen (21) genutzt. Der Wärmeleiter (32) ist hier ein Festkörper (z.B. ein Band oder Profil) aus gut wärmeleitfähigen Materialien, wie z.B. Kupfer oder Aluminium, wobei die Wärme durch diffusive Wärmeleitung übertragen wird. Alternativ, kann eine thermische Kopplung auch durch konvektive Wärmeleitung mittels flüssiger oder gasförmiger Wärmeträger oder durch ein Wärmerohr (heat pipe) erfolgen, in dem die Wärme durch Verdampfung und Kondensation übertragen wird.

Die Reaktionszone (12) der Brennstoffzelle, der Wärmeleiter (32) und die Baugruppen (21) des Ionenmobilitätsspektrometers sind von einer Wärmeisolierung (23) umgeben, um die Wärmeverluste zur Umgebung niedrig zu halten und somit einen möglichst hohen Anteil der Abwärme der Brennstoffzelle zur Beheizung der Baugruppen (21) zu nutzen. Die Betriebselektronik (13) und das Brennstoffreservoir (14) der Brennstoffzelle sowie die bei Umgebungstemperatur betriebenen Baugruppen (22), die den Ionendetektor, die Betriebselektronik und Komponenten eines Gaskreislaufes des Ionenmobilitätsanalysators umfassen, sind vorzugsweise außerhalb der Wärmeisolierung angeordnet, um sie nicht thermisch zu belasten.

Die Gleichgewichtstemperatur der zu beheizenden Baugruppen (21) des Gasanalysators (30) stellt sich ohne zusätzliche Heizung oder Kühlung auf einen Wert zwischen der Umgebungstemperatur und der Betriebstemperatur der Reaktionszone (12) der Brennstoffzelle ein. Ein niedriger thermischer Widerstand des Wärmeleiters (32) und ein hoher thermischer Widerstand der Wärmeisolierung (23) zur Umgebung verschieben die Temperatur der Baugruppe (21) zu höheren Temperaturen. Bei einer gegebenen elektrischen Leistung der Brennstoffzelle und der damit verbundenen Heizleistung kann durch geeignete Wahl des thermischen Widerstands des Wärmeleiters (32) und des thermischen Widerstands der Wärmeisolierung (23) zur Umgebung die Temperatur der zu beheizenden Baugruppen (21) auf eine bestimmte Temperaturdifferenz zur Umgebungstemperatur voreingestellt werden. Die Temperatur der zu beheizenden Baugruppen (21) liegt dabei oberhalb der Umgebungstemperatur und ändert sich mit der Umgebungstemperatur.

Oft ist es erforderlich oder wünschenswert die Temperatur der zu beheizenden Baugruppen (21) konstant oder zumindest in einem bestimmten Temperaturbereich zu halten. Der Gasanalysator (30) weist sowohl eine Kühlvorrichtung (26) als auch eine elektrische Zusatzheizung (27) auf, die je nach Umgebungstemperatur kombiniert oder alternativ benutzt werden, um den Gasanalysator (30) in einem weiten Umgebungstemperaturbereich und bei konstanter Solltemperatur der Baugruppen (21) betrieben zu können. Liegt die Temperatur der Baugruppen (21) über einer vorbestimmten Solltemperatur führt die zusätzliche Kühlvorrichtung (26) die überschüssige Wärme an die Umgebung ab. Die Kühlvorrichtung (26) weist hier eine Kühlfläche oder Kühlkörper mit Kontakt zur Umgebungsluft und einen regelbaren Lüfter auf, der eine regelbare Menge Umgebungsluft auf die Kühlfläche bzw. den Kühlkörper leitet. Liegt die Temperatur der Baugruppen (21) unter der vorbestimmten Solltemperatur werden die Baugruppen (21) durch die elektrische Zusatzheizung (27) zusätzlich geheizt. Die Zusatzheizung (27) wird wie die anderen elektrischen Komponenten des Gasanalysators (30) durch die Brennstoffzelle versorgt. Optional, kann die zusätzliche Heizung und Kühlung durch ein Peltierelement erfolgen, das in der jeweiligen Polarität betrieben wird und thermisch mit der Umgebung verbunden ist.

Die Tabelle 1 zeigt typische Daten für den Energiebedarf des Gasanalysators (20) aus dem Stand der Technik und des erfindungsgemäßen Gasanalysators (30), wobei beide Gasanalysatoren ein Ionenmobilitätsspektrometer mit einem geheizten Membraneinlass haben, und daraus abgeleitete Laufzeiten.

**Tabelle 1**

| Zeile | Energiequelle | DMFC 25W separat angeordnet (wie in Abb. 1) | DMFC 25W thermisch gekoppelt (wie in Abb. 2) |
|---|---|---|---|
| 1 | Energiedichte massebezogen (kWh/kg) | 5.6 | 5.6 |
| 2 | Leermasse (kg) | 0.36 | 0.36 |
| 3 | Masse des Brennstoffs (kg) | 0.3 | 0.3 |
| 4 | Gesamtmasse der Brennstoffzelle (kg) | 0.66 | 0.66 |
| 5 | Wirkungsgrad der Brennstoffzelle | 0.21 | 0.21 |
| 6 | nutzbare elektrische Energie (Wh) | 353 | 353 |
| 7 | elektrische Leistungsaufnahme der Elektronik (W) | 5.00 | 5.00 |
| 8 | Leistungsaufnahme der Einlassmembran-Heizung (W) | 20.00 | 20.00 |
| 9 | Abwärme der Brennstoffzelle (W), die bei der Versorgung der Elektronik anfällt | 18.81 | 18.81 |
| 10 | Abwärme der Brennstoffzelle (W), die zur Heizung der Einlassmembran genutzt wird | 0 | 9.40 |
| 11 | zusätzlich benötigte Leistung (W) zur Heizung der Einlassmembran, davon | 20.00 | 10.60 |
| | - elektrische Leistung (W) | 20.00 | 3.68 |
| | - genutzte Abwärme der Brennstoffzelle (W) | 0.00 | 6.92 |
| 12 | elektrische Leistungsaufnahme der Elektronik und der Einlassmembran-Heizung (W) | 25.00 | 8.68 |
| 13 | Laufzeit (h) | 14.11 | 40.66 |

Die Zeilen 1 bis 6 der Tabelle 1 enthalten typische Werte einer DMFC-Brennstoffzelle. In den Zeilen 7 und 8 ist die Leistungsaufnahme eines Ionenmobilitätsspektrometers mit einer beheizten Einlassmembran an der unteren Grenze der Umgebungstemperatur angegeben. Es ist durchaus typisch für Gasanalysatoren mit beheizten Baugruppen, dass der Heizenergiebedarf einen erheblichen, teilweise sogar den überwiegenden Anteil am Gesamtenergiebedarf ausmacht. Der Zeile 9 ist zu entnehmen, dass die Brennstoffzelle aufgrund des angenommenen Wirkungsgrades von 21% mehr Abwärme produziert als elektrische Leistung bereitstellt wird. Bis hierhin sind die Werte bei einer separaten und einer thermisch gekoppelten Brennstoffzelle gleich.

Für den erfindungsgemäßen Gasanalysator mit einer thermisch gekoppelten Brennstoffzelle wird in Zeile 10 angenommen, dass 50% der Abwärme für die Heizung der beheizten Baugruppen (21), insbesondere der Einlassmembran, genutzt werden kann. Die thermische Kopplung kann beispielsweise einfach dadurch erfolgen, dass die Reaktionszone (12) der Brennstoffzelle durch ein Band aus einem Kupfergeflecht in thermischen Kontakt mit einer der beheizten Baugruppen (21) gebracht wird. Die restliche Abwärme der Brennstoffzelle wird an die Umgebung abgeführt. Beim Betrieb der separat angeordneten Brennstoffzelle ohne eine thermische Kopplung wird die Abwärme nicht zur Heizung von Baugruppen genutzt, sondern vollständig an die Umgebung abgeführt, so dass hier der genutzte Anteil der Abwärme gleich Null ist.

Aufgrund des unterschiedlichen Nutzungsgrades der Abwärme ergeben sich unterschiedliche Werte für die zusätzlich aufzubringende elektrische Leistung zur Heizung der Einlassmembran. Bei der thermisch gekoppelten Brennstoffzelle wird ein Teil der Abwärme, die bei der Bereitstellung der elektrischen Leistung für die Zusatzheizung entsteht, direkt zur Heizung der Einlassmembran verwendet (Zeile 11). Die elektrische Leistungsaufnahme der Elektronik und der Heizung der Einlassmembran beträgt mit einer thermischen Kopplung nur 8.68 W und ohne Kopplung 25 W (Zeile 12), woraus sich bei einer nutzbaren elektrischen Energie von 353 Wh (Zeile 6) Laufzeiten von 41 bzw. 14 Stunden ergeben (Zeile 13). Ein erfindungsgemäßer Gasanalysator (30) mit thermischer Kopplung weist somit eine nahezu dreifache Laufzeit gegenüber einem Gasanalysator (20) aus dem Stand der Technik auf. Zudem wird die an die Umgebung abgegebene Abwärme um den gleichen Faktor reduziert.

Die **Abbildung 3** zeigt einen erfindungsgemäßen Gasanalysator (40) mit einem beheizten Mobilitätsanalysator (21a), der thermisch über zwei Wärmekoppler (11, 24) und ein Wärmerohr (heat pipe) (32) mit der Reaktionszone (12) einer Brennstoffzelle gekoppelt ist.

Wärmerohre transportieren Wärmeenergie durch Verdampfen einer Flüssigkeit an der Wärmequelle, Transport des Dampfes, Kondensation an der Wärmesenke, und Rückfluss der Flüssigkeit durch Kapillarkräfte. Dafür ist die Innenwand eines Wärmerohres meist mit einem porösem Sintermaterial oder mit einem meist metallischem Geflecht ausgestattet. Die Wärmeleitung ist um Größenordnungen höher als die der bestleitenden Metalle. Allerdings gilt das nur, solange die Temperatur der zu beheizenden Baugruppen unterhalb der Kondensationstemperatur des Wärmeübertragungsmediums liegt.

Die Brennstoffzelle ist hier eine DMFC Brennstoffzelle, die vorzugsweise bei einer Temperatur zwischen 90 und 120°C betrieben wird. Die Solltemperatur des Mobilitätsanalysators beträgt etwa 80°C. Der Siedepunkt des Wärmeübertragungsmediums wird so gewählt, dass eine Überheizung des Mobilitätsanalysators (21a) verhindert wird. Die Wärmetauscher (11, 24) koppeln das Wärmerohr (32) an die Reaktionszone (12) und den Mobilitätsanalysator (21a) und bestehen aus einem gut wärmeleitfähigen Metall, wie z.B. Ag, Cu oder Al. Innerhalb der beheizten Baugruppen des Mobilitätsanalysators (21a) erfolgt die Wärmeübertragung durch Wärmeleitung über die Wandung oder bei gering wärmeleitfähigen Wandmaterialien durch eine zusätzliche Hülle aus einem ausreichend gut wärmeleitfähigen Material.

Der Mobilitätsanalysator (21a), das Wärmerohr (32), die Wärmekoppler (11, 24) und die Reaktionszone (12) der Brennstoffzelle sind zur effektiven Nutzung der Abwärme von einer Wärmeisolierung (23) aus einem wenig wärmeleitfähigen Material, vorzugsweise aus verdichteter Glas- oder Steinwolle umschlossen. Die Dicke der Wärmeisolierung wird vorzugsweise so gewählt, dass die bei der elektrischen Versorgung des Gasanalysators entstehende Abwärme der Brennstoffzelle bei einer Umgebungstemperatur von 20°C (Raumtemperatur) gerade zur Beheizung des Mobilitätsanalysators (21a) auf 80°C ausreicht.

Bei einer derart dimensionierten Wärmeisolierung wird bei einer Umgebungstemperatur unterhalb von 20°C eine zusätzliche Wärmezufuhr über die elektrische Zusatzheizung (27) erforderlich, um die Betriebstemperatur des Mobilitätsanalysators (21a) konstant zu halten. Mit steigender Umgebungstemperatur wird die Leistung der Zusatzheizung (27) automatisch bis auf Null heruntergeregelt. Um zu vermeiden, dass sich der Mobilitätsanalysator (21a) bei Umgebungstemperaturen über 20°C überhitzt, verfügt der Gasanalysator (40) über eine Kühlvorrichtung in Form eines Lüfters (26), der in einer Aussparung der Wärmeisolierung (23) angeordnet ist und im aktiven Zustand den Wärmekoppler (11) an der Reaktionszone (12) anbläst. Bei Umgebungstemperaturen, bei denen keine Zusatzheizung (27) erforderlich ist, erfolgt die Temperaturregelung des Mobilitätsanalysators (21a) durch Steuerung der Förderleistung des Lüfters (26).

Das Brennstoffreservoir (14) ist vorzugsweise als Wechselkartusche ausgebildet und zur besseren Zugänglichkeit außerhalb der Wärmeisolierung (23) angeordnet.

Die **Abbildung 4** zeigt einen erfindungsgemäßen Gasanalysator (50) mit einem Ionenmobilitätsspektrometer, der eine beheizbare Einlassmembran (21b) und unbeheizte Baugruppen (22) aufweist. Die Betriebstemperatur der Einlassmembran (21b) beträgt 60°C. Der Gasanalysator (50) weist zudem eine Zusatzheizung (28), einen als Steckbuchse ausgebildeten Wärmekoppler (29) sowie eine Niedertemperatur-DMFC (direct methanol fuel cell) oder Niedertemperatur-DEFC (direct ethanol fuel cell) Brennstoffzelle auf. Die Brennstoffzelle besteht aus einer Reaktionszone (12), einem als Steckverbinder ausgebildeten Wärmekoppler (16), der Betriebselektronik (13) und einem Brennstofftank (14).

Die zur thermischen Kopplung dienenden Steckverbindungen (16, 29) können mechanisch mit einer elektrischen Verbindung (31) gekoppelt sein, die die Reaktionszone (12) der Brennstoffzelle elektrisch mit den Baugruppen des Ionenmobilitätsspektrometers verbindet. Dabei ist mindestens einer der elektrischen Kontakte der Brennstoffzelle so gestaltet, das er sowohl die thermische als auch die elektrische Kopplung zwischen der Brennstoffzelle und den Baugruppen des Gasanalysators (50) realisiert. Die elektrische Masseverbindung des Gasanalysators (50) wird über die thermische Steckverbindungen (16, 29) realisiert, während der zweite Betriebsspannungsanschluss über eine separate Steckverbindung im Kabel (31) geführt ist. Die Ausführung der thermischen und elektrischen Verbindung der Baugruppen als Steckkontakte ermöglicht eine variable Stromversorgung des Gasanalysators (50) sowohl mit geeigneten Brennstoffzellen als auch mit Akku- und Primärzellenpacks oder einen Stromversorgungsmodul für Netzanschluss.

Die Steckverbindungen (16, 29) können Koaxialsteckverbindungen sein, die eine ausreichende Wärmeleitfähigkeit aufweisen. Sie sind dann wie zur Übertragung größerer Leistungen verwendete Hochfrequenzsteckverbindungen aufgebaut, können aber auch in Form nebeneinander angeordneter massiver metallischer Kontaktstifte und Kontaktbuchsen oder in Form federbelasteter Flächenkontakte aus elektrisch und thermisch gut leitfähigen Materialien ausgeführt sein.

Die im Gasanalysator (50) bevorzugt verwendeten Niedertemperatur-DMFC- und DEFC-Brennstoffzellen erreichen bereits bei Betriebstemperaturen von 30-50°C hohe Wirkungsgrade. Da diese Temperaturen unterhalb der Betriebstemperatur der Einlassmembran (21b) von 60°C liegen, ist eine zusätzliche elektrische Heizung der Einlassmembran (21b) über die elektrische Zusatzheizung nötig. Hierbei kommt es infolge der Temperaturdifferenz zu einem Wärmefluss von der geheizten Einlassmembran (21b) zur Reaktionszone (12) der Brennstoffzelle, was zu Wärmeverlusten an der Einlassmembran (21b) und zu einer Aufheizung der Brennstoffzelle führen kann, so dass diese außerhalb des Bereichs mit dem höchsten Wirkungsgrad betrieben wird. Die Aufheizung der Brennstoffzelle wird dadurch vermieden, dass ein Peltierelement (28) zwischen den thermischen Steckverbindungen (16, 29) und der beheizten Einlassmembran (21b) angeordnet ist und als Zusatzheizung verwendet wird. Bei einem elektrischen Stromfluss vorgegebener Richtung durch das Peltierelement (28) wird wie bei einer Wärmepumpe eine Seite aufgeheizt und gleichzeitig die andere abgekühlt. Die geheizte Seite des Peltierelementes (28) ist mit der zu beheizenden Einlassmembran (21b) und die gekühlte Seite ist mit den Steckverbindungen (16, 29) verbunden. Der Stromfluss durch das Peltierelement (28) bewirkt einen elektrisch induzierten Wärmefluss von der gekühlten zur geheizten Seite, der den entgegengesetzt gerichteten parasitären Wärmefluss durch den thermischen Widerstand des Peltierelements (28) überwiegt.

Der effektive Wirkungsgrad eines Peltierelements (28) liegt bei 10-20%. Das heißt, dass der Brennstoffzelle 10-20% der eingesetzten elektrischen Leistung als Wärme entzogen werden und die Brennstoffzelle gekühlt wird. Auf der heißen Seite des Peltierelements (28) steht demgegenüber sowohl die eingesetzte elektrische Leistung als auch die auf der anderen Seite entzogene Wärmeleistung zur Beheizung der Einlassmembran (21b) zur Verfügung, so dass der Wirkungsgrad als Heizung bezogen auf die eingesetzte elektrische Leistung sogar größer als 1 ist. Das entspricht dem Wirkungsmechanismus einer Wärmepumpe, die unter Einsatz elektrischer Energie Wärme von der Seite niederer Temperatur zur Seite höherer Temperatur transportiert. Damit wird die unter dem Einfluss des Temperaturgradienten auftretende Wärmediffusion in Richtung zur Brennstoffzelle durch den elektrothermischen Wärmetransport des Peltierelements (28) zur Einlassmembran (21b) hin überkompensiert. Die Brennstoffzelle kann bei ihrer optimalen Temperatur betrieben werden und gibt dabei Wärme an die bei höherer Temperatur betriebene Einlassmembran (21b) ab.

Die **Abbildung 5** zeigt einen erfindungsgemäßen Gasanalysator (60) mit einem Massenspektrometer, z.B. vom Quadrupolfilter- oder Ionenfallen-Typ. Das Massenspektrometer weist einen beheizten Einlassblock (21c) und unbeheizte Baugruppen (22) auf.

Der Einlassblock (21c) enthält eine mit der Umgebung verbundene geheizte Einlasskapillare, an die sich ein mehrstufiges Blendensystem zur stufenweisen Druckreduzierung vom Umgebungsdruck bis zum Arbeitsdruck des Massenanalysators anschließt. Die Einlasskapillare und das sich daran anschließende Einlassblendensystem werden zur Vermeidung der Kondensation von Substanzen auf eine Temperatur von 150-200°C geheizt und sind hierzu im beheizten Einlassblock (21c) untergebracht. Der Einlassblock (21c) sorgt für die thermische Ankopplung der zu beheizenden Komponenten des Massenspektrometers und enthält zudem eine Reihe von Kanälen, die miteinander verbunden und mit einem flüssigen Wärmeübertragungsmedium gefüllt sind.

Der Gasanalysator (60) enthält weiterhin eine Batterie von Phosphorsäure-Brennstoffzellen, die bei einer Temperatur von etwa 200°C betrieben werden. Der zum Betrieb der Phosphorsäure-Brennstoffzellen benötigte Wasserstoff wird über eine kleine Druckflasche bereitgestellt. Derartige Druckflaschen sind z.B. zum Betrieb mobiler Gaschromatographen zwischen 0,2 und 2 Liter kommerziell erhältlich. Der Sauerstoff kann aus der Luft entnommen werden. Die Phosphorsäure-Brennstoffzelle ist anspruchslos in Bezug auf die Reinheit der Luft; dadurch ergibt sich ohne aufwändige Filterung der Luft ein stabiler Betrieb. Die Phosphorsäure-Brennstoffzelle liefert keine sehr hohe Stromdichte und ist daher auch nicht extrem klein zu bauen. Das ist jedoch in Anbetracht der Baugröße eines Massenspektrometers mit einem Pumpsystem nicht kritisch.

Die benötigte Leistung des Massenspektrometers liegt allein durch das Pumpsystem und die Beheizung des Einlassblocks (21c) in der Regel über 20 W. Die in den Brennstoffzellen entstehende Abwärme wird von der Reaktionszone (12) mit Hilfe eines Wärmetauschers (11) über einen Flüssigkeitskreislauf abgeführt und zu dem Einlassblock (21c) geleitet. Der Wärmetauscher (11) ist dabei thermisch eng mit der die Reaktionszone (12) der Brennstoffzelle verbunden. Die Leitungen (38) verbinden die Anschlüsse des Einlassblocks (21c), den Wärmetauscher (11) und eine Zirkulationspumpe (36) zu einem geschlossenen Flüssigkeitskreislauf, der z.B. mit Silikon-Öl gefüllt ist. Zwischen dem Ausgang des Einlassblocks (21c) und dem Wärmetauscher (11) befindet sich im Flüssigkeitskreislauf weiterhin ein Kühler (35) und ein Thermostatventil (37), das unterhalb einer vorgegebenen Flüssigkeitstemperatur geöffnet ist und den Kühler (35) überbrückt. Der Schaltpunkt des Thermostatventils (37) wird auf 180 bis 200°C festgelegt, so dass der Kühler (35) erst oberhalb dieser Temperatur durchströmt wird und seine Kühlwirkung entfalten kann. Der Kühler (35) selbst ist innerhalb eines Kühlschachts im Gasanalysator (60) angeordnet und wird bedarfsweise mit Hilfe eines Lüfters mit Umgebungsluft gekühlt.

Bei niedrigen Umgebungstemperaturen, bei denen die Abwärme der Brennstoffzelle nicht zur Heizung des Einlassblocks (21c) auf die Betriebstemperatur ausreicht, wird der Einlassblock (21c) durch eine elektrische Zusatzheizung (27) geheizt, die von der Brennstoffzelle elektrisch versorgt wird.

Der beheizte Einlassblock (21c), die Reaktionszone (12), der Wärmetauscher (11) und die elektrische Zusatzheizung sind von einer Wärmeisolierung (23) umschlossen.

Es versteht sich, dass der Kreislauf statt mit einer Flüssigkeit grundsätzlich auch mit einem Gas als Arbeitsmedium betrieben werden kann.

Die **Abbildung 6** zeigt den schematischen Aufbau eines Ionenmobilitätsspektrometers (70), in einer Ausführungsform mit einer geheizten Spürsonde (21d), die durch eine geheizte Membran (21e) Partikel verdampft. Die Dämpfe werden einem Mobilitätsanalysator (21f) zuführt. Ein Methanol-Tank (14) versorgt DMFC-Brennstoffzellen (71 bis 76) mit Methanol als Brennstoff. Der Tank (14) ist dabei von außen nachfüllbar oder austauschbar.

Die Membran (21e) kann beispielsweise in bekannter Weise aus Silikonmaterial gefertigt sein; Silikonmembranen nehmen organische Substanzdämpfe auf und geben sie rückseitig wieder ab. Das Ionenmobilitätsspektrometer (70) kann mit der Tastsonde auf eine verdächtige Oberfläche (oder auf eine Wischprobe) gedrückt werden und zeigt durch einen entsprechenden Alarm auf der Oberfläche vorliegende Drogen, Sprengstoffe oder andere Substanzen an. Die Oberfläche kann beispielsweise eine Kofferoberfläche, die Auskleidung eines AutoKofferraums, aber auch die Oberfläche der Bekleidung einer verdächtigen Person sein.

Die DMFC hat den Vorteil, dass der Brennstoff Methanol leicht nachgefüllt werden kann, da er nicht, wie etwa Wasserstoff, unter Druck steht. Es gibt es bereits Kartuschen mit Methanol auf dem Markt, die leicht eingesetzt werden können. Die Kartuschen besitzen sogar eine Zulassung für die Mitnahme in Passagierflugzeugen. Normalerweise werden DMFC-Batterien mit etwa 30-prozentigem Methanol in Wasser betrieben; es sind aber bereits DMFC-Ladegeräte für Handys auf dem Markt, die mit 99-prozentigem Methanol betrieben werden und bei einer Größe von 150x56x19 Kubikmillimeter eine Spannung von 5,4 Volt und eine Leistung von 9 Watt liefern.

Die Abwärme der Brennstoffzellen (71 bis 76) wird von dünnen Kupferplatten (19) aufgenommen, und durch ein System von Wärmerohren (18) zum Mobilitätsanalysator (21f) und zur Spürsonde (21d) geführt. Der Mobilitätsanalysator (21f) und die Spürsonde (21d) sind von einer Isolierschicht (23) umgeben. Innerhalb des Gehäuses (17) wird den Brennstoffzellen (71 bis 76) Luft zugeführt. Oberhalb des Mobilitätsanalysators (21f) befindet sich eine Elektronik (24) mit Anzeigeeinheit (25). Das Gerät mit einem Gewicht von ungefähr einem Kilogramm kann mit Griffen (nicht eingezeichnet) gehalten und mit der Spürsonde (21d) gegen eine Oberfläche gedrückt werden, um anhaftende Partikel oder adsorbierte Substanzen zu analysieren.

Das Ionenmobilitätsspektrometer (70) ist dabei bevorzugt in Sandwich-Bauweise konstruiert sein: Eine Brennstoffzelle unten trägt den mechanischen Teil des Mobilitätsanalysators (21f), darüber befindet sich, thermisch isoliert, die Elektronik für die Spannungsversorgung, Messung, Datenverarbeitung und Anzeige. Dadurch ist die Brennstoffzelle frei zugänglich, beispielsweise um Brennstoff nachzufüllen. Das Ionenmobilitätsspektrometer (70) kann gut beheizt auf einer günstigen Temperatur zwischen 100 und 200 Grad Celsius, bevorzugt zwischen 150 und 180 Grad Celsius, gehalten werden. Die Elektronik wiederum kann durch Isolierung und Wärmeableitung nach außen gekühlt werden.

Die Batterie der Brennstoffzellen (71 bis 76), die zusammengeschaltet eine Spannung von etwa sechs Volt liefert, trägt darüber den mechanischen Teil des Mobilitätsanalysators (21f), der im geheizten Zustand gehalten werden soll, damit keine Substanzen kondensieren können. Dieser mechanische Teil besteht aus Einlassteil (21d) für die Zuführung der zu analysierenden Substanzdämpfe, hier mit einer Spürsonden-Membran (21e), des Weiteren aus dem Mobilitätsanalysator (21f) mit Ionenquelle, Driftrohr und Detektor (nicht im Einzelnen gezeichnet). Der Mobilitätsanalysator (21f) kann zusammen mit einem Luftfilter und Umluftpumpe in einem Volumen von etwa 8x16x4 Kubikzentimetern untergebracht und mit einer Isolierschicht (23) vor Wärmeverlusten geschützt werden.

Unter der Brennstoffzellenbatterie (71 bis 76) befindet sich der Methanol-Tank (14). Durch diesen Aufbau ist die Brennstoffzellenbatterie (71 bis 76) mit Tank (14) frei zugänglich, beispielsweise um Brennstoff nachzufüllen oder den Tank (14) zu auszutauschen. Die Elektronik (24) wiederum kann durch Isolierung und Wärmeableitung nach außen genügend gut gekühlt werden. Im Betrieb liegt der Bedarf des Ionenmobilitätsspektrometers (70) an elektrischer Leistung bei nur etwa 10 bis 20 Watt.

## Patentansprüche

1. Gasanalysator mit einer Brennstoffzelle und mindestens einer Baugruppe, die oberhalb der Umgebungstemperatur betrieben wird, **dadurch gekennzeichnet, dass** die Brennstoffzelle thermisch mit der mindestens einen Baugruppe gekoppelt ist und die Abwärme der Brennstoffzelle zur Heizung der mindestens einen Baugruppe beiträgt.

2. Gasanalysator nach Anspruch 1, **dadurch gekennzeichnet, dass** mehr als 20% der für die Baugruppe benötigten Heizleistung durch die Abwärme der Brennstoffzelle erbracht wird.

3. Gasanalysator nach einem der Ansprüche 1 oder 2, **dadurch gekennzeichnet, dass** die Baugruppe eine Membran eines Einlasssystems, eine Desorbervorrichtung, ein Filter, eine Ionenquelle und/oder ein Ionenanalysator ist.

4. Gasanalysator nach einem der Ansprüche 1 bis 3, **dadurch gekennzeichnet, dass** die Baugruppe eine Betriebstemperatur zwischen 40 bis 250 Grad Celsius aufweist.

5. Gasanalysator nach einem der Ansprüche 1 bis 4, **dadurch gekennzeichnet, dass** die Brennstoffzelle thermisch durch ein Wärmerohr oder einen Fluidkreislauf mit der Baugruppe gekoppelt ist.

6. Gasanalysator nach einem der 1 bis 4, **dadurch gekennzeichnet, dass** der Gasanalysator ein Peltierelement aufweist, das thermisch mit der Brennstoffzelle und der Baugruppe gekoppelt ist.

7. Gasanalysator nach einem der Ansprüche 1 bis 6, **dadurch gekennzeichnet, dass** der Gasanalysator eine Vorrichtung zur Regelung der thermischen Kopplung zwischen der Brennstoffzelle und der Baugruppe aufweist.

8. Gasanalysator nach Anspruch 7, **dadurch gekennzeichnet, dass** die Vorrichtung die thermische Kopplung der Brennstoffzelle schaltet oder stetig verändert.

9. Gasanalysator nach einem der Ansprüche 7 oder 8, **dadurch gekennzeichnet, dass** die Vorrichtung einen mechanischen Kontakt zwischen der Brennstoffzelle und der Baugruppe herstellt, der schaltbar ist oder dessen Andruckkraft veränderlich ist.

10. Gasanalysator nach einem der Ansprüche 1 bis 9, **dadurch gekennzeichnet, dass** der Gasanalysator eine Vorrichtung zur Regelung der Betriebstemperatur der Brennstoffzelle oder zum Ein-/Ausschalten oder Regeln der Brennstoffzelle aufweist.

11. Gasanalysator nach einem der Ansprüche 1 bis 10, **dadurch gekennzeichnet, dass** der Gasanalysator eine elektrische Zusatzheizung aufweist, die thermisch mit der Baugruppe gekoppelt ist.

12. Gasanalysator nach einem der Ansprüche 1 bis 11, **dadurch gekennzeichnet, dass** der Gasanalysator eine Kühlvorrichtung aufweist, die thermisch mit der Baugruppe gekoppelt ist.

13. Gasanalysator nach einem der Ansprüche 1 bis 12, **dadurch gekennzeichnet, dass** die Baugruppe von anderen Baugruppen des Gasanalysators, die nicht oberhalb der Umgebungstemperatur betrieben werden, thermisch isoliert ist.

14. Gasanalysator nach einem der Ansprüche 1 bis 13, **dadurch gekennzeichnet, dass** der Gasanalysator ein mobil einsetzbares Ionenmobilitätsspektrometer oder Massenspektrometer ist.

15. Verfahren zum Betrieb eines Gasanalysators, der bei Atmosphärendruck zum Aufspüren gefährlicher Substanzen betrieben wird und eine Brennstoffzelle und mindestens eine oberhalb der Umgebungstemperatur betriebene Baugruppe aufweist, bei dem die Brennstoffzelle für die Erzeugung der elektrischen Betriebsenergie des Gasanalysators verwendet wird, **dadurch gekennzeichnet, dass** die Abwärme der Brennstoffzelle für eine Temperierung der mindestens einen Baugruppe genutzt wird.
